Europäisches Patentamt

European Patent Office

Office européen des brevets

(11) Publication number: **0 287 045**
**A2**

## EUROPEAN PATENT APPLICATION

(21) Application number: 88105835.8

(22) Date of filing: 13.04.88

(51) Int. Cl.4 **C08K 9/04 , C08K 9/06 , C08K 3/08 , C08K 3/22 , C08L 77/00 , //(C08L77/00, 23:08)**

(30) Priority: 15.04.87 JP 92892/87

(43) Date of publication of application:
19.10.88 Bulletin 88/42

(84) Designated Contracting States:
CH DE FR GB IT LI

(71) Applicant: Kishimoto Sangyo Company Ltd.
4-34, Fushimi-cho Higashi-ku
Osaka-shi Osaka(JP)

(72) Inventor: Tsutsui, Kenji
4-27, Miyakenaka 1-chome
Matsubara-shi Osaka(JP)
Inventor: Moriwaki, Takeshi
12-11, 2-cho, Kaorigaoka-cho
Sakai-shi Osaka(JP)

(74) Representative: Türk, Gille, Hrabal
Bruckner Strasse 20
D-4000 Düsseldorf 13(DE)

(54) Metal powder filled polyamide composite and the process for manufacturing the same.

(57) Metal powder filled plastic composite comprising 80-92 weight percent of surface treated metal powder or metal oxide powder, 8-20 weight percent of polyamide resin, 0.1-10 weight percent of at least one kind of flexible resin selected from ethylene-alpha-olefin copolymer and ethylene-unsaturated carboxylic acid copolymer and process for manufacturing the same.

EP 0 287 045 A2

# METAL POWDER FILLED POLYAMIDE COMPOSITE AND THE PROCESS FOR MANUFACTURING THE SAME

## FIELD OF THE INVENTION

The present invention is directed to the high specific gravity thermoplastic composite filled with metal powder and the like in high concentration and the process of manufacturing the same. to produce such products as flywheel or micromotor parts for electric and electronic appliances.

## BACKGROUND OF THE INVENTION

### Prior art

The high specific gravity plastic composites made by filling metal powder such as iron powder or brass powder in high concentration (for example 70-80 weight percent), have been molded by injection molding process and used as flywheel etc., and the plastic composite filled with ferric oxide in high concentration is magnetized after the injection molding process have been used for magnetic parts such as micromotor parts.

However, since the difficulties in the compounding, prior art has many defects, for example, that the contents of metal powder in such composites is limited (usually 70 weight percent in case of metal powder), the unreliability in its performance by the nonhomogeneity of the components, decrease of the mechanical strength of the parts, and the difficulties in the processing especially giving excessive wear to the compounding machine and injection molding machine.

### The problems to be solved by the invention

This invention was made to improve such defects in the prior art and to develop a high performance metal filled composite and the process of manufacturing the same.

## DETAILED DESCRIPTION OF THE INVENTION

Hereinafter the detailes of this invention is described, namely, the constituents of the metal filled thermoplastic resin composite and the process of manufacturing the same. The composite referred to this invention consists of:

(1) 80-92 weight percent of metal powder or metal oxide powder, surface treated with silane coupling agents or zircoaluminate coupling agents.

(2) 20-8 weight percent of polyamide resin.

(3) 0.1-10 weight percent of flexible resin components selected from ethylene-alpha-olefin copolymer, ethylene-unsaturated carboxylic acid copolymer.

The metal powders used in the composite referred to this invention include reduced iron powder (pulverized), atomized iron powder, or atomized copper powder, etc. for high specific gravity parts such as flywheel, and oxide of ferric elements usually referred to as ferrite is used for magnetic composite.

The necessary point of this invention is, at first, the metal powders or metal oxide powders should be surface treated in order to improve the affinity with the resins.

For this purpose, organic silane compounds. such as gamma-aminopropyltriethoxysilane, N-beta-(aminoethyl) gamma-aminopropyltrimethoxy silane, N-phenyl-gamma-aminopropyltrimethoxysilane, gamma-glycidoxypropyltrimethoxysilane, or zircoaluminate coupling agents having organofunctional ligand such as carboxyl, aliphatic, or methacryloxy groups, or organic titanate coupling agents such as isopropyl triisostearoyl titante, isopropyl tri(dodecyl)benzenesulfonyl titanate, isopropyl tri(dioctyl)pyrophosphate titanate, etc., can be used. Among which, gamma-aminopropyltriethoxylsilane is most effective for polyamide composite.

The amount of the said coupling agents lies between 0.001-2.0 weight percent, more preferably 0.01-0.5 weight percent for metallic fillers. The effect is not sufficient if the contents is lower than this amount, and no further improvement is observed above this upper amount.

The polyamide resin used in this invention is the resin produced by condensation reaction of linear diamine expressed in the following equation

$H_2N-(CH_2)x-NH_2$

where x is an integer of 6 to 12, with linear dicarboxylic acid expressed in the following equation

$HCOO-(CH_2)y-COOH$

where y is an integer of 2 to 8.

These polyamide can also be produced by the reaction of amine producing derivative of the said amine and the acid producing derivative such as ester, acid chloride, amine salt, etc. Typical dicarboxylic acid for producing polyamide include adipic acid, pimelic acid, suberic acid, sebacic acid, and dodecanedioic acid, and typical diamine include hexamethylenediamine and octamethylenediamine. Examples of polyamide include polyhexamethylenediadipamide (Nylon 66), polyhexamethyleneazelamide (Nylon 69), polyhexamethylene sebacamide (Nylon 610), polyhexamethylenedodecamide (Nylon 612), polycaprolactam (Nylon 6), polylaurylolactam (Nylon 12), polyundecanoamide (Nylon 11), bis(p-aminocyclohexyl)-methanedodecanoamide. Further, polyamide produced from two or more of the above starting material, copolymer or ternery copolymer, such as the copolymer made from adipic acid, isophthalic acid, and hexamethylenediamine. Preferably the polyamide is linear in structure and the melting point of which is above 170°C. The composite in this invention also include copolymers such as Nylon 66 and polylactam, Nylon 6 (polycaprolactam ) for example, and the compounds of polyamide, the mixture of Nylon 66 and Nylon 6 for example. The polyamide used in this invention also include the modified grade made by mixing various modifiers, impact modifiers are cited as an example of the modifiers, and it is known that modified polyethylene made by grafting unsaturated carboxylic acid on polyethylene or ethylene-propylene copolymer chain is used as an impact modifier.

The new metal filled composites of this invention is made by mixing surface treated metal powder with Nylon resin powder, and simultaneously, one or more flexible material selected from ethylene-alpha-olefin copolymer, ethylene-unsturated carboxylic acid copolymer, ionic crosslinked ethylene-unsaturated carboxylic acid copolymer.

The said ethylene-alpha-olefin copolymer is the copolymer made by coordinating copolymerization of ethylene with 5-20 weight percent of alpha-olefin having four or more carbon atoms, namely butene-1, hexene-1, octene-1, etc., using Ziegler type catalyst.

The said ethylene-unsaturated carboxylic acid copolymer is the copolymer made by copolymerizing ethylene with 5-30 weight percent, preferably 10-20 weight percent, of unsaturated carboxylic acid such as acrylic acid, methacrylic acid, maleic anhydride, crotonic acid, and itaconic acid. The ion crosslinked copolymer made by partially neutralizing carboxyl group of the unsaturated acid, so called ionomer, is also included.

The content of the said ethylene copolymer in the composite is 0.1-10 weight percent, preferably 0.5-2 weight percent for polyamide resin. Little effect is observed when the content is lower than this amount and the rigidity, heat deflection temperature becomes lower when the content is above this amount.

The effect of ethylene copolymer is extremely clear, making this invention extremely useful. The first effect is, since the said ethylene copolymers melt rapidly and wet the inside wall of the cylinder, the wear of the cylinder by the metal powder is necessarily reduced. The second effect is that when the mixture of composite is mixed at high speed by means of using intensive mixer such as Henschel mixer, the ethylene copolymer in the mixture melt rapidly by the generated friction heat, because the melting point of the copolymers lie between 100-140°C, and adhere to metal powder and polyamide powder to make granular form of mixture of metal powder and resin powder by sequencial cooling with slow speed rotation. By means of making such granular mixture, separation of metal powder and polyamide resin powder do not occur during storage and by handling, so the parts having uniform composition can be molded.

Another effect of the copolymer is that the copolymer reduces the viscosity of the molten composite, preventing Nylon polymer from being degraded by the heat generated by the shearing action of the screw, which may cause the decrease of the mechanical strength of the molded parts. Added advantage of the ethylene copolymer is to give suitable flexibility to the parts, which is effective for mold release at the molding process and also increases the toughness of the parts. Thus, the said ethylene copolymers in this invention play an important role not only for binder of the mixture, but also for improving the processability and the mechanical properties of the composites.

The ethylene copolymers specified in this invention are more heat stable and resist against higher temperature than the materials proposed as the binders of the same purpose proposed in the prior art. For example, water soluble Nylon 8 decomposes above 270°C, and polyvinyl acetate decomposes above 240°C and reduces the strength of the parts, both ethylene-alpha-olefin copolymer and ethylene-unsaturated carboxylic acid copolymer do not decompose at 290°C. Therefore the molding range of the material is extremely extended and the industrial advantage is extremely great.

The composite of this invention can incorporate suitable contents of plasticizers in order to increase impact resistance, low temperature mechanical properties, and for giving flexibility together with improving processability by the effect of improving plasticity and fluidity of the composite. For example, 0.5-20 weight percent, preferably 1-5 weight percent, of o-and/or p-toluenesulfonamide or butylbenzyl phthalate. The addition of plasticizer below this content is not effective for improvinmg the said properties, and addition of more plasticizer is not preferable because the decrease of the heat deflection temperature of the composite becomes evident.

The composite referred to this invention can incorporate, 0.01-5 weight percent, preferably 0.1-2 weight percent of antioxidants, for example, phenolic antioxidants such as tetraester type hindered phenol antioxidant, phosphite antioxidants such as tetrakis(2,4-di-t-butylphenol)-4.4'-biphenylene phosphite, to prevent the composite from being degraded during processing and in actual use.

The composite referred to this invention can also incorporate lubricants (or slip agents), or mold release agents for preventing the degradation of material from being degraded by excessive shearing heat generated at the plasticating and kneading process, and to improve the mold release of the parts. For this object, it is effective to incorporate 0.01-2 weight percent, preferebly 0.05-0.5 weight percent of lubricants such as stearic acid, methylene bisstearamide, montanic acid esters, or polyethylene wax.

The composite of this invention can incorporate 0.1-20 weight percent, preferably 2-10 weight percent of lubricants such as silicone oil, powders such as graphite, Molybdenum disulfide, polytetrafluoroethylene, etc.

The composite referred to this invention can be molded by injection molding machine, directly from the powder blend, or as usual, after pelletized by melt compounding by single screw extruder, twin screw extruder, or extruder equipped with special kneading mechnisms.

Another procedures for carrying out the manufacturing of the composite referred to this invention is, that the composite is mixed by an intensive mixer such as Henschel mixer, and melt the flexible resin components of the compound by the friction heat to produce a granular mixture, in which metal powders and polyamide powders are uniformely mixed and adhered each other, and then the metal powder filled plastic pats are made by melt compounding accompanied with the plasticating stage of injection molding process. This process is extremely effective when the metal powder used in the composite is relatively coarse, for example, average particle size is 150 mesh in Tyler standard sieve to mold uniform composite. However, this invention is not limited by this process.

When the powder mixture or granular mixture made by melt adhesion of flexible resins are injection molded, conventional reciprocating screw injection molding machine can be used, but the screw equipped with dispersing mechanisms, such as pin type, gear type, gives better reults. In addition, the mechanism described in Japan Patent No. 1104727 also gives uniformely mixed parts.

In carrying out the injection molding of the composite referred to this invention, it is preferable to use a feeding equipment geared to the rotation of the screw of the injection molding machine, and control the feeding of composite so that the material is fed in starve condition in the feeding section of the cylinder of the machine. The effect is, at first, that the material is considerably degassed, and secondary, since the resistance against the screw advance at the injection stage is reduced, screw can travel smoothly in the setted stroke with setted combination of screw position and screw advance speed, thus producing precision parts effectively.

Another advantage of using the said procedure is, since the material is molten and kneaded at reduced pressure in the cylinder of the machine, the damage to the screw is necessarily reduced. However, the composite itself, referred to this invention, is not limited by this process.

## Effect

This invention improves the uniformity and the processability, of metal powder of metal oxide filled high specific gravity plastic composite or plastic magnet composite, by the effect of the component of 0.1-10 weight percent of specified ethylene copolymers, and in addition, the damage of the injection molding machine is necessarily reduced. Furthermore, this invention also developed a new process for consistent injection molding and the production of precise high specific gravity plastic composite parts.

## DESCRIPTION OF THE PREFERRED EMBODIMENTS

The following examples illustrate the composition of the present invention. It is not be construed to limit the claims in any manner whatsoever.

### Example 1

(1) 5000g of Iron powder of 200 mesh average particle size (Tyler standard sieve), made by atomized process (KIP 300A, specific gravity 7.85, soled by Kawasaki Steel Corporation) is mixed in an intensive mixer (Super Mixer soled by Kawata Industries) with 200 r/m, and 25g silane coupling agent (KMB603, soled by Shin-etsu Chemical Industries Ltd., diluted 10 times by modified ethyl alcohol/water = 9/1 mixture) is added and mixed for further 30 minutes at 750 r/m, then the alcohol evaporated to make dry powder of surface treated iron powder.

(2) The 818 g of Nylon 6 resin powder (1011F, soled by Ube Industries, Ltd.), 48 g of o. and p-toluenesulfonamide mixture (Topcizer No. 5, soled by Fuji Amide Chemical Co., Ltd.), 38 g of methylenebisstearoamide (Bunlub N18P, soled by Harima Chemical Company), and 48 g of ethylene-unsaturated carboxylic acid copolymer (Nucrel 1525, soled by Mutsui-DuPont Polychemicals Company) are put successively into the mixer, and mixed for 30 minutes with 750r/m. The temperature of the mixture rised to 140°C and ethylene-unsaturated carboxylic acid copolymer melted.

(3) Then the mixer is cooled by passing water through the jacket of the machine while mixing with 100 r/m for 20 minutes, and granular mixture is obtained.

### Comparative Experiment 1

(1) Surface treated iron powder is made as same procedure as Example 1.

(2) Then 771 g Nylon 6 powder (1011F, Ube Industries, Ltd.), 48 g of o-, and p-toluenesulfonamide mixture (Topcizer No. 5, Fuji Amide Chemical Co., Ltd.), 38 g of methylenebis stearoamide, and 633 g of 15 % alcoholic solution of Nylon 8 (Namari-ichi Industries Ltd.) are put into the mixer and mixed for 5 minutes with 750 r/m. Then the mixture is dried in air circulating oven at 80°C for 2 hours, and after crushed roughly, dried successively in a vacuum drier at 100°C for 4 hours, and thus granular mixture is obtained.

### Comparative Experiment 2

Granular mixture is obtained with the same formulation and same procedure with Comparative Experiment 1, except 190 g of polyvinyl acetate emulsion of 50% solid content (Vinysol 602, Daido Chemical Industries, Ltd.) is used for Nylon 8 solution.

The mixtures obtained by Example 1, Comparative Experiment 1, and Comparative Experiment 2 were injection molded by the injection molding machine equipped with a molten material kneading mechanism described in Japan Patent No. 1104727. The mixtures are fed through the screw feeder geared to the rotation of the screw of the injection molding machine, so that the feed section of the cylinder of the machine is kept at starve condition. The mold for tensile specimens No. 4 (3.2 mm thickness) specified by ASTM D638, and Izod impact specimen (64 mm length, 12.7 mm width, and 6.4 mm thickness) specified by ASTM D256 was set on the machine and molding was operated as the temperatures of the cylinder were varied for three levels as shown in Table 1. The results of the molding and the physical tests are shown in Table 2. As shown by this experiment, the composition referred to this invention maintaines greater strength even by the molding at elevated temperatures, thus proving useful materials to be applied in extensive fields of products.

### EXAMAPLE 2

With same process and the same procedure as Example 1, granular mixtures of iron powder and Nylon powder were prepared by changing the amounts and/or types of Nylon resin powder and flexible resins as shown in Table 3. These compounds were injection molded soon after the preparation of the compound, using the injection molding machine equipped with kneading mechanism for molten material described in

5

Japan Patent No. 1104727, and the mixtures are fed through the screw feeder geared to the rotation of the screw of the injection molding machine so that the feed section of the cylinder of the machine is kept at starve condition. The molded parts are tensile specimen No. 4 (3.2 mm thickness) specified by ASTM D638, and bending test specimen (127 mm length, 12.7 mm width, and 3.2 mm thickness) specified by ASTM D790, with the cylinder temperature of 270°C.

The results of the molding and physical properties are shown in Table 3, which indicate that the consistency in the molding process and good balance of physical properties of the composite is attainable with the formulation referred to this invention.

## EFFECT OF THE INVENTION

The present invention accomplished the composite having many industrial advantage and the effective process for manufacturing the composite, in that the perfect uniformity and the improvement of processability in the injection molding process of metal powder filled high specific gravity plastic composite or plastic magnet composite are obtained by the present invention, by the action of suitably added ethylene copolymers to the polyamide resin, and also attained high specific gravity composite unattainable with prior art, and consistency in the mechanical strength, and reduced the damage of the molding machine associated with the molding process.

### TABLE 1 MOLDING CONDITIONS FOR EXAMPLE 1 AND COMPARATIVE EXPERIMENT

|  | Tensile specimen | | | Izod impact specimen | | |
|---|---|---|---|---|---|---|
| Cylinder temperatures, $^{o}$C | 240 | 270 | 290 | 240 | 270 | 290 |
| Screw rotation, r/m | 100 | 100 | 100 | 100 | 100 | 100 |
| Injection pressure (gauge), kg/cm$^2$ | 90 | 90 | 90 | 90 | 90 | 90 |
| Holding pressure (gauge), kg/cm$^2$ | 60 | 50 | 40 | 70 | 60 | 50 |
| Total injection time, seconds | 5 | 5 | 5 | 15 | 15 | 15 |
| Cooling time, seconds | 15 | 15 | 15 | 25 | 25 | 25 |
| Mold temperatue, $^{o}$C | 80 | 80 | 80 | 80 | 80 | 80 |

### TABLE 2 RESULTS OF EXAMPLE 1 AND COMPARATIVE EXPERIMENTS

|  | Example 1 | | | Comparative experiment 1 | | | Comparative experiment 2 | | |
|---|---|---|---|---|---|---|---|---|---|
| Cylinder temperatures, $^{o}$C | 240 | 270 | 290 | 240 | 270 | 290 | 240 | 270 | 290 |
| Tensile strength, N/mm$^2$ | 42.2 | 42.2 | 39.2 | 46.1 | 37.2 | 19.6 | 39.2 | 19.6 | 17.6 |
| Elongation, % | 2.8 | 2.8 | 2.6 | 3.0 | 2.1 | 0.5 | 2.0 | 0.5 | 0.4 |
| Izod impact, kg.cm/cm | 4.5 | 4.5 | 4.5 | 4.0 | 2.8 | 2.0 | 3.5 | 2.2 | 1.8 |
| Appearance of the parts * | A | A | A | A | C | D | B | D | D |

* Note
A: Surface is smooth and glossy
B: Surface is smooth but lusterless
C: Generates silver streaks
D: Generates much silver streaks

## TABLE 3 FORMULATION AND RESULTS OF EXAMPLE 2

| | UNITS | No.-1 | No.-2 | No.-3 | No.-4 | No.-5 | No.-6 | No.-7 | No.-8 | No.-9 | No.-10 |
|---|---|---|---|---|---|---|---|---|---|---|---|
| **FORMULATION** | | | | | | | | | | | |
| Treated iron powder *1 | g | 5,000 | 5,000 | 5,000 | 5,000 | 5,000 | 5,000 | 5,000 | 5,000 | 5,000 | 5,000 |
| Nylon 6 powder *2 | g | 650 | 647 | 630 | 600 | 550 | 650 | 647 | 625 | 600 | 550 |
| Ethylene-unsaturated carboxylic acid copolymer *3 | g (% of Nylon) | 0.5 (0.08) | 2 (0.31) | 20 (3.1) | 50 (7.7) | 100 (15.4) | | | | | |
| Ethylene-alpha-olefin copolymer *4 | g (% of Nylon) | | | | | | 0.6 (0.09) | 3 (0.46) | 25 (3.8) | 50 (7.7) | 100 (15.4) |
| o-, p-toluenesulfonamide *5 | g | 30 | 30 | 30 | 30 | 30 | 30 | 30 | 30 | 30 | 30 |
| Methylene bisstearoamide *6 | g | 10 | 10 | 10 | 10 | 10 | 10 | 10 | 10 | 10 | 10 |
| | | | | | | | | | | | |
| **Results** | | | | | | | | | | | |
| Moldability *7 | | C | B | A | A | A | C | B | A | A | A |
| Tensile strength (ASTM D638) | $N/mm^2$ | — | 24.5 | 26.5 | 26.5 | 19.6 | — | 25.5 | 28.4 | 28.4 | 21.6 |
| Flexural modulus (ASTM D790) | $N/mm^2$ | — | 14700 | 13200 | 12800 | 9300 | — | 14700 | 13700 | 13200 | 9800 |
| Deflection temperature under load (ASTM D648), 18.6kg/cm$^2$ | $^{\circ}C$ | — | 140 | 137 | 137 | 110 | — | 145 | 145 | 140 | 120 |
| Specific gravity (ASTM D792) | | | | | | | | | | | |
| Average | | — | 4.33 | 4.53 | 4.51 | 4.50 | — | 4.31 | 4.50 | 4.52 | 4.50 |
| Standard deviation | | — | 0.41 | 0.067 | 0.03 | 0.032 | — | 0.15 | 0.08 | 0.05 | 0.03 |
| Coefficient of variance | % | — | 3.2 | 1.5 | 0.67 | 0.7 | — | 3.5 | 1.8 | 1.1 | 0.67 |

Note
*1 KIP300A, soled by Kawasaki Steel Corporation. Treated by Silane coupling agent KBM903 soled by Shin-etsu Chemical Co., Ltd
*2 Nylon 1011F, soled by Ube Industries, Ltd.
*3 Nucrel 1525, soled by Mitsui-DuPont Polychemical Company.
*4 Tafmer P-0280, soled by Mitsui Petrochemical Industries, Ltd.
*5 Topcizer No. 5, soled by Fuji Amide Chemical Co., Ltd.
*6 Banlube N18P, soled by Harima Chemical Company.
*7 Ranking of evaluation
    A: Consistent molding was possible
    B: Molding is possible, but the fluctuation of the driving torque of the screw was large.
    C: The mixture separated in the hopper and at the feeding section of the barrel, resulting in to plug the barrel and the operation of the machine became impossible.

0 287 045

## Claims

(1) Metal powder filled plastic composite comprising 80-92 weight percent of surface treated metal powder or metal oxide powder, 8-20 weight percent of polyamide resin, 0.1-10 weight percent of at least one kind of flexible resin selected from ethylene-alpha-olefin copolymer and ethylene-unsaturated carboxylic acid copolymer.

(2) Metal powder filled composite as defined in claim 1, wherein the metal powder is iron powder, copper powder, brass powder, or zinc powder.

(3) Metal powder filled composite as defined in claim 1, wherein the metal oxide powder is ferric oxide.

(4) Metal powder filled composite as defined in claim 1, wherein the carbon number of the alpha-olefin is more than four.

(5) Metal powder filled composite as defined in claim 1, wherein the carboxylic acid of the ethylene-unsaturated carboxylic acid copolymer is neutralized by metal ion to form ion linked copolymer.

(6) Metal powder filled composite as defined in claim 1, wherein the metal powders or metal oxide powders are surface treated by silane coupling agents.

(7) Metal powder filled composite as defined in claim 1, wherein the metal powders or metal oxide powders are surface treated with zircoaluminate coupling agents.

(8) The manufacturing process for the metal filled composite as defined in claim 1, wherein the powder mixture is molded by reciprocating screw injection molding machine.

(9) The manufacturing process for the metal powder filled composite as defined in claim 8, wherein the injection molding machine is equipped with a kneading mechanism as defined in Japan Patent No.1104727 (U. S. Patent No. 4,300,840).

(10) The manufacturing process for the metal filled composite as defined in claim 8, wherein the material is fed into the machine through the feeder geared to the rotation of the screw of the machine, so that the feed zone of the said injection molding machine is kept at starve condition.